# EUROPEAN PATENT SPECIFICATION

(11) **EP 1 972 533 B1**
(45) Date of publication and mention of the grant of the patent: **30.06.2010**
(21) Application number: 07006106.4
(22) Date of filing: 23.03.2007
(51) Int. Cl.: B62J 11/00, B62M 1/02, B62M 1/04

(54) **Multipurpose transmission mechanism for bicycle**
Mehrzweckübertragungsmechanismus für ein Fahrrad
Mécanisme de transmission multifonction pour bicyclette

(43) Date of publication of application: 24.09.2008
(73) Proprietor: Chong, Ok Yeo, Hexi District Tianjin 300024 (CN)
(72) Inventor: Seol, Marn Taek, Kyung Gi-Do (KR)
(74) Representative: Zeitler, Giselher

(56) References cited:
- EP-A- 1 688 344
- WO-A-97/43168
- US-A- 5 088 340
- US-A1- 2005 046 140

## Description

### BACKGROUND OF THE INVENTION

### 1. Field of the Invention

The present invention relates to a multipurpose transmission mechanism for a bicycle, and in particular to a transmission mechanism comprising a clip bracket that can be easily mounted to the bicycle frame to couple a multi-mode mechanism to the bicycle frame.

### 2. The Related Arts

Bicycles equipped with a gear-shifting mechanism are available in the market. The gear-shifting mechanism functions to switch the operation of the bicycle among different sprockets of different speed ratios. Besides switching among different sprockets of different speed ratios, the conventional gear-shifting mechanism does not function to alert operation mode of the bicycle. This makes it only possible to exercise particular muscles in riding the bicycle. Further, a single, fixed operation mode also makes long term riding boring.

Thus, US Patent No. 5,088,340, entitled "Multipurpose Transmission Mechanism for Bicycles", filed by the present inventor discloses a bicycle of which the operation mode can be changed. In other words, besides the conventional operation of continuous rotation of the pedals, other operation modes, including leverage mode and independent pedaling mode, are also available. Such variety of operation modes allows a bicycle rider to select the most suitable mode for riding and exercising. Such a transmission mechanism is also applicable to stationary bicycles.

However, the conventional multipurpose suffers some drawbacks.

(A) The bicycle disclosed in US Patent No. 5,088,340 requires a particular-purpose hub mounted in a rear wheel in order to allow the bicycle to carry out leverage mode operation and the particular-purpose hub is of high manufacturing costs as compared to regular hubs.

(B) The rear wheel hub of the bicycle disclosed in US Patent No. 5,088,340 is of heavy weight, which makes it difficult to operate for certain users.

(C) The multipurpose transmission mechanism of the bicycle disclosed in US Patent No. 5,088,340 is easy to malfunction.

In view of the drawbacks, the present inventor teaches in EPC Patent Application Serial No. 06 001 561.7, entitled "Improved Multifunctional Pedaling Motion Bicycle" a bicycle transmission mechanism that effectively overcomes the drawbacks discussed above. However, the known transmission mechanism must work with a particular-purpose bicycle frame. Since it does not work with regular bicycle frame, it is difficult to get popularized. In addition, it is not possible for general consumers to do assembling by themselves. Other conventional references are also known. WO 97/43168 A discloses a transmission mechanism according to the preamble of claim 1, namely a bicycle attachment or mechanism that permits a forward force to be applied to the bicycle's drive wheel by reverse rotation of the bicycle's pedals in addition ot permitting a forward force to be applied to the back wheel by a forward rotation of said pedals. In other words, the pedals are allowed to simultaneously rotate in opposite directions for driving the bicycle. This mechanism includes a pedal sprocket mounted to a pedal shaft and driving a main chain. The main chain drives a pair of one-way freewheeling clutches, which are respectively connected to separate shaftes and collector sprockets. The collector sprockets drive a collector chain, which in turn drives a drive chain. Such a mechanism suggested in WO 97/43168 A is complicated in the sense that multiple chains are included in the mechanism. This makes it impractical. US 2005/0046140 A1 discloses a mechanism for driving bicycles, which aims to increasing efficiency of transferring peddling force applied to a pedal crank assembly to the rear wheel of a bicycle. Such a mechanism is generally mounted to a lower portion of a frame of the bicycle to facilitate the operation thereof.

Thus, it is desired to further improve the bicycle transmission mechanism to allow easy and quick assembling and compatible with the conventional bicycle frames.

### SUMMARY OF THE INVENTION

An object of the present invention is to provide a multipurpose transmission mechanism for a bicycle, which comprises a quick assembly device that allows quick assembling of a multi-mode mechanism to a regular bicycle frame so that a regular bicycle is provided with a clutch-based control mechanism that selectively allows pedal cranks of the bicycle to carry out a variety of pedaling modes, including the conventional alternate pedaling operation, synchronous and same-direction up and down pedaling operation, rotary pedaling, both side alternate up-and-down pedaling, and single side up-and-down pedaling. In addition, assembling the transmission mechanism to a bicycle frame is easy, requiring no service of professional mechanics. Further, the transmission mechanism can be applied to regular bicycle frames. Thus, the present invention realizes utilization and low costs and can be popularized to be applied to all kinds of bicycles.

The present invention has the following advantages:

(1) While the conventional transmission mechanisms need parts of particular designs, the present invention allows for easy assembling by using a quick assembly device. The quick assembly device functions to support a multi-mode mechanism. With such an arrangement, even a regular bicycle frame can function as a multi-mode bicycle and can be assembled in an efficient manner.

(2) The conventional transmission mechanism must be installed by professional mechanics. This increases the manufacturing costs and makes popularization difficult. The present invention, however, can be assembled by the general consumers. Thus, popularization can be effectively achieved.

To realize the above object, in accordance with the present invention, a transmission mechanism according to claim 1 for a bicycle having a frame is provided. Further embodiments are mentioned in the sub-claims.

### BRIEF DESCRIPTION OF THE DRAWINGS

The present invention will be apparent to those skilled in the art by reading the following description of a preferred embodiment thereof, with reference to the attached drawings, wherein:

Figure 1 is an exploded view of a multipurpose transmission mechanism constructed in accordance with the present invention;

Figure 2 is a cross-sectional view of a multipurpose transmission mechanism constructed in accordance with the present invention in an assembled condition;

Figure 3 is a perspective view of a clip bracket of the multipurpose transmission mechanism of the present invention;

Figure 4 an enlarged side elevational view of the multipurpose transmission mechanism mounted to a bicycle frame;

Figure 5 is a cross-sectional view of the multipurpose transmission mechanism of the present invention mounted to the bicycle frame;

Figure 6 is an enlarged cross-sectional view of a multi-mode mechanism of the transmission mechanism of the present invention, illustrating an operation thereof;

Figure 6A is a side elevational view illustrating a pedaling mode of the present invention;

Figure 7 is an enlarged cross-sectional view of the multi-mode mechanism of the transmission mechanism of the present invention, illustrating another operation thereof;

Figure 7A is a side elevational view illustrating another pedaling mode of the present invention;

Figure 8 is an enlarged cross-sectional view of the multi-mode mechanism of the transmission mechanism of the present invention, illustrating a further operation thereof; and

Figure 8A is a side elevational view illustrating a further pedaling mode of the present invention.

### DETAILED DESCRIPTION OF THE PREFERRED EMBODIMENT

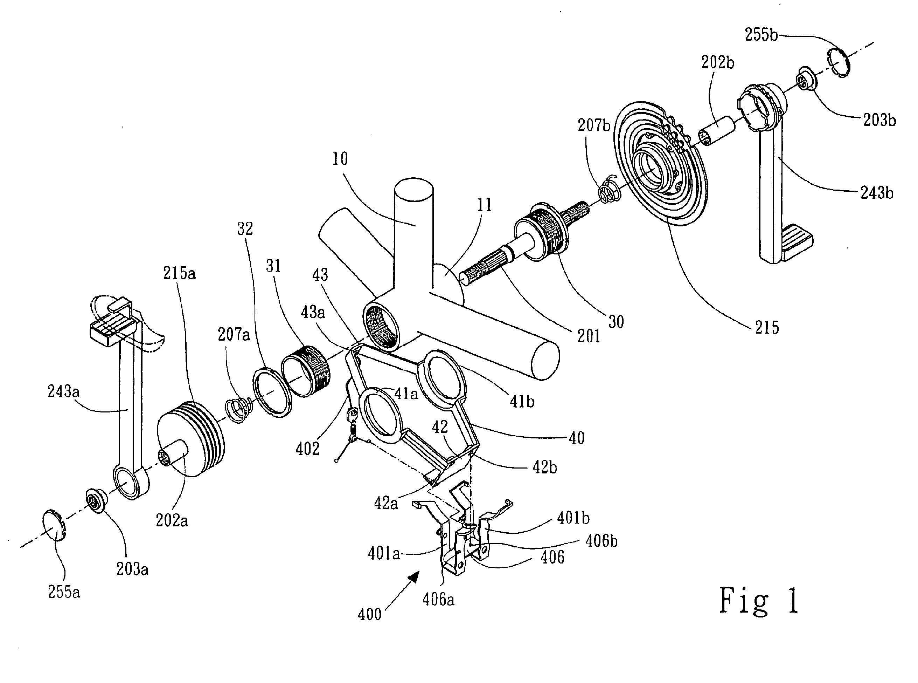

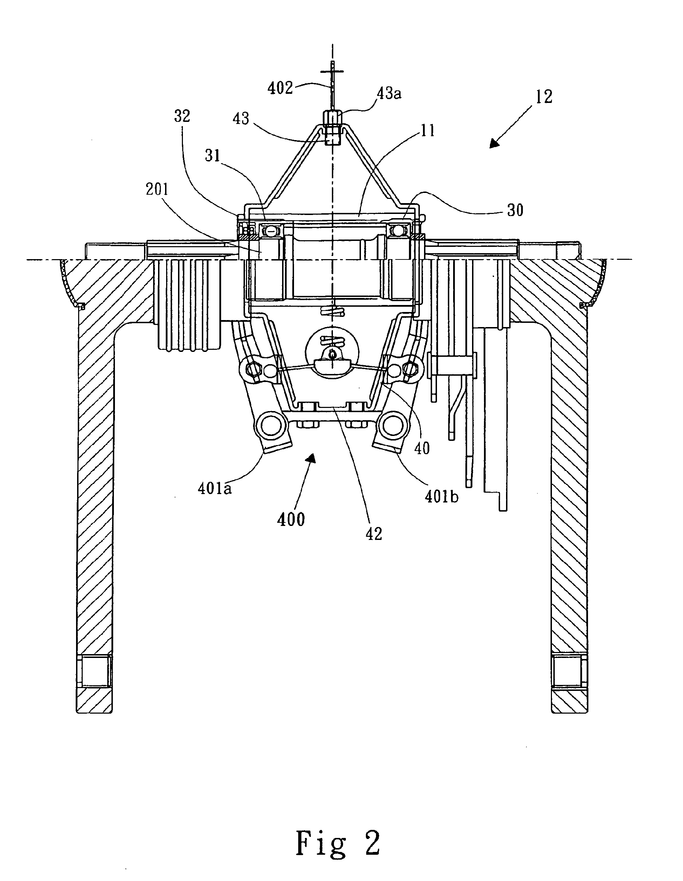

With reference to the drawings and in particular to Figures 1 and 2, which are an exploded view and a cross-sectional view, in an assembled condition, of a multipurpose transmission mechanism constructed in accordance with the present invention, the transmission mechanism is incorporated in a bicycle for switching the operation of the bicycle among different modes. The transmission mechanism comprises a quick assembly device 12 and a multi-mode mechanism 200. The quick assembly device 12 comprises a central shaft 201, threaded collars 30, 31, and a clip bracket 40.

The transmission mechanism of the present invention is mounted to a lower frame portion 11 of a frame 10 of a regular bicycle or a stationary bicycle. To mount the transmission mechanism, retention rings 41 a, 41 b of the clip bracket 40 are positioned in alignment with a bore (not labeled) of the lower frame portion 11 of the bicycle frame 10. The central shaft 201 of the quick assembly device 12, with the threaded collar 30, which has bearing accommodated therein, mounted thereon in advance as shown in Figure 1, is then inserted through both the retention rings 41 a, 41 b of the clip bracket 40 and the lower frame portion 11 of the bicycle frame 10. After the central shaft 201 extends through the retention ring 41a, 41b of the clip bracket 40 and the lower frame portion 11 of the bicycle frame 10, the threaded collar 31, which has bearing accommodated therein, is fit over and mounted to an opposite ends of the central shaft 201. A fixing ring 32 is then fit over and mounted to an outer end section of the threaded collars 30, 31 to "quickly" secure the retention rings 41a, 41 b in position. The opposite ends of the central shaft 201 are then fit through resilient elements 207a, 207b, inner-threaded retention tubes 202a, 202b of driving sprocket means 215 and gear-shifting means 215a, pedal cranks 243a, 243b, locking members 203a, 203b, and caps 255a, 255b.

Clips 401 a, 401 b are arranged outside the lower frame portion 11 of the bicycle frame 10 at locations corresponding to the clip bracket 40. The retention rings 41 a, 41 b of the clip bracket 40 have downward extensions forming therebetween a rear support block 42 which defines inner-threaded holes 42a, 42b and also have upward extensions forming therebetween a front support block 43, which defines an inner-threaded hole 43a. The clips 401 a, 401 b, which constitute a control mechanism 400, comprises a support block 406 that is attached to the clip bracket 40. A control cable 402 has lower branches (not labeled) respectively secured to the clips 401 a, 401 b.

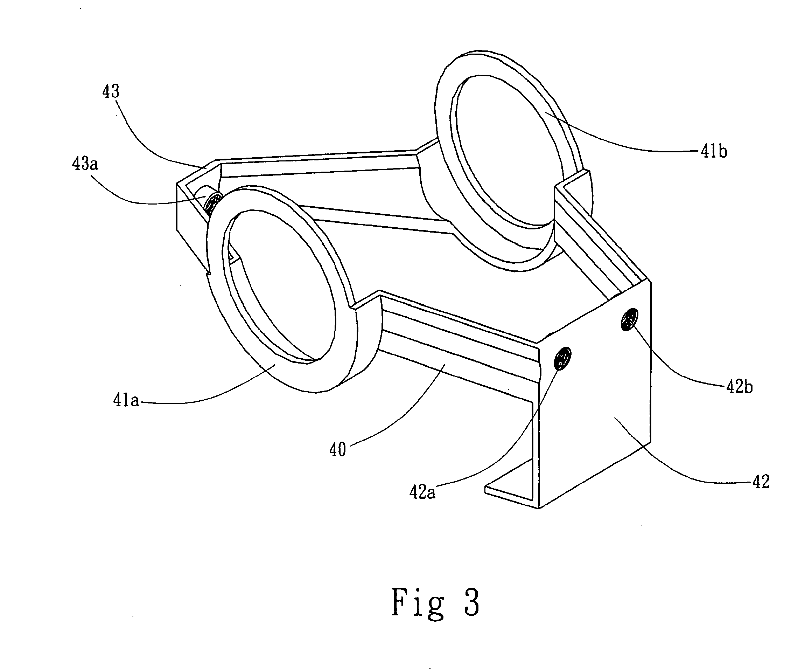

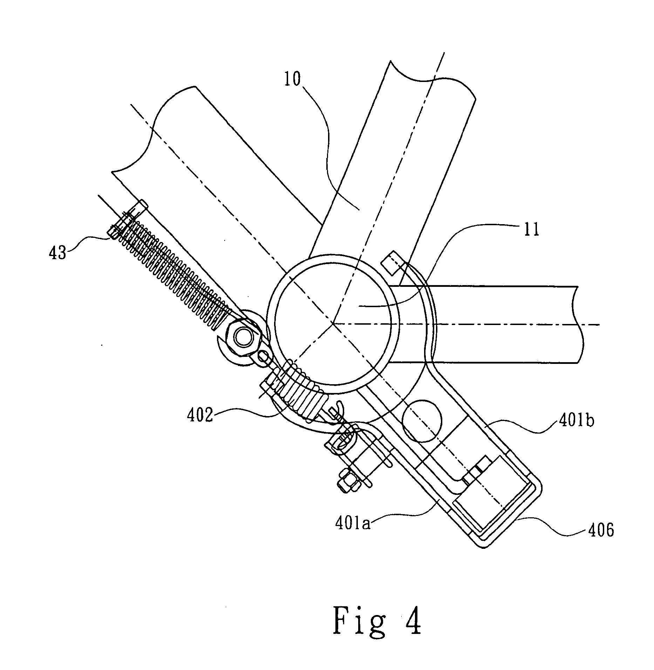

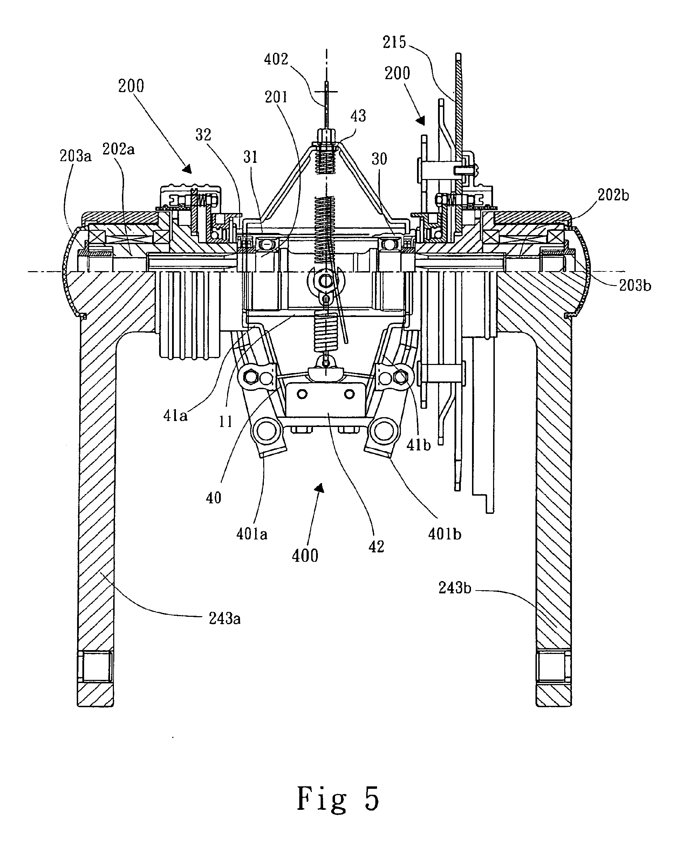

With additional reference to Figure 3, which shows a perspective view of the clip bracket 40, as well as Figures 4 and 5, which are an enlarged side elevational view and a cross-sectional view of the transmission mechanism of the present invention mounted to the bicycle frame, the clip bracket 40 is provided, corresponding to the opposite sides of the lower frame portion 11 of the bicycle frame 10, with the retention rings 41 a, 41 b, which are positioned in alignment with the opposite ends of the bore of the lower frame portion 11, and are supported by the threaded collars 30, 31 and secured against the lower frame portion 11 by the fixing rings 32, whereby the clip bracket 40 is secured to the lower frame portion 11 of the bicycle frame 10.

The support block 406 of the clips 401a, 401b of the control mechanism 400 is secured by bolts that engages inner-threaded holes 406a, 406b defined in the support block 406 and put in alignment with the inner-threaded holes 42a, 42b of the rear support block 42 of the clip bracket 40. The control cable 402 is then attached to the clips 401a, 401b and thereafter, a front end of the control cable 402 is extended through the inner-threaded hole 43a of the front support block 43 of the clip bracket 40 to allow the control cable 402 to control the operation of the clips 401 a, 401 b.

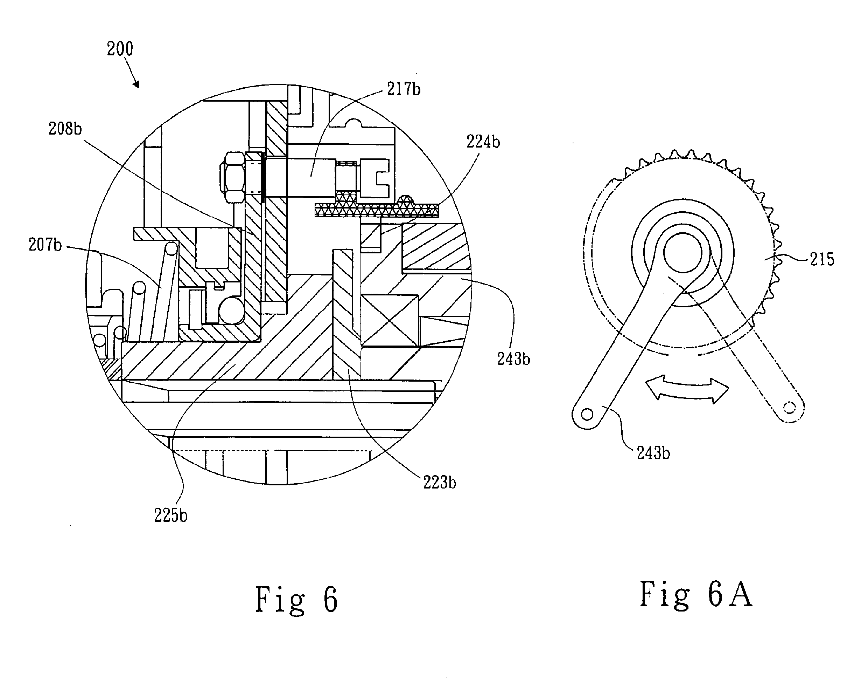

Referring to Figures 1, 2, and 5, the multi-mode mechanism 200 has a symmetrical arrangement on opposite sides of the central shaft 201, except the driving sprocket means 215 and the gear-shifting means 215a. Only one side of the symmetric arrangement will be explained as an example to describe the present invention, and it is noted that although only reference numerals with a postfix of "b" will be described, counterpart and symmetric reference numerals with a postfix of "a" are of identical construction and operation. The multi-mode mechanism 200 comprises a resilient element 207b (as well as a counterpart and symmetric element 207a on the other side, see Figure 1), a driving disk 208b, a clutch ring block 224b, a control block 223b, and a connection rod 217b. A controller (not shown) can be mounted at any suitable location on the bicycle frame 10 to be accessed and operated by a user to operate the control cable 402 to for example release the clips 401a, 401 b and simultaneously, the resilient element 207b urges the driving disk 208b to move and the clips 401a, 401 b are simultaneously moved outward whereby the clutch ring block 224b is forced to abut against a recess formed on a side surface of the pedal crank 243b. The driving disk 208b engages a transmission block 225b. In this condition, the driving power induced by the user's pedaling is transmitted through the pedal crank 243b to drive the driving sprocket means 215, while the power from the other pedal crank 243a is transmitted through the transmission block 225b to drive the driving sprocket means 215 (see Figures 5, 6, and 6A). This allows the pedal cranks 243a, 243b to do up and down operation in the same direction for driving a rear wheel through the driving sprocket means 215.

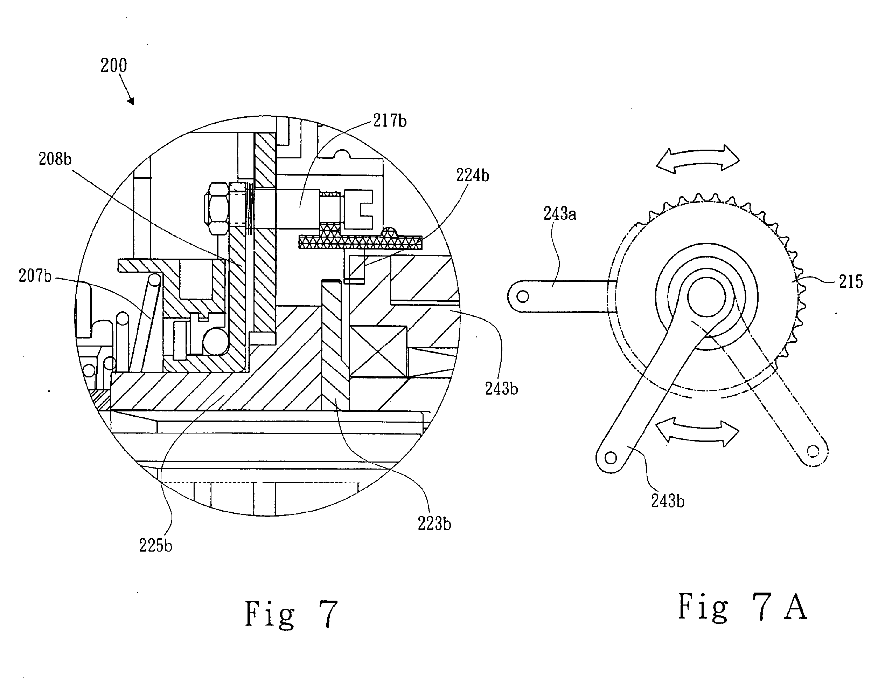

Referring to Figures 7 and 7A, when the control cable 402 is operated to cause the clips 401a, 401b (see Figure 5) to control the driving disk 208b to drive the clutch ring block 224b through the connection rod 217b, and making the driving disk 208b displaced away from the transmission block 225b and disengaging from the transmission block 225b, the pedal cranks 243a, 243b are allowed to operate independently. Thus, the pedal cranks 243a, 243b can independently drive the driving sprocket means 215 whereby the driving sprocket means 215 can obtain continuous or intermittent supply of power and the pedal cranks 243a, 243b can be pedaled up and down independently or rotated independently to realize various modes of pedaling operation that transmits power to the rear wheel through the driving sprocket means 215.

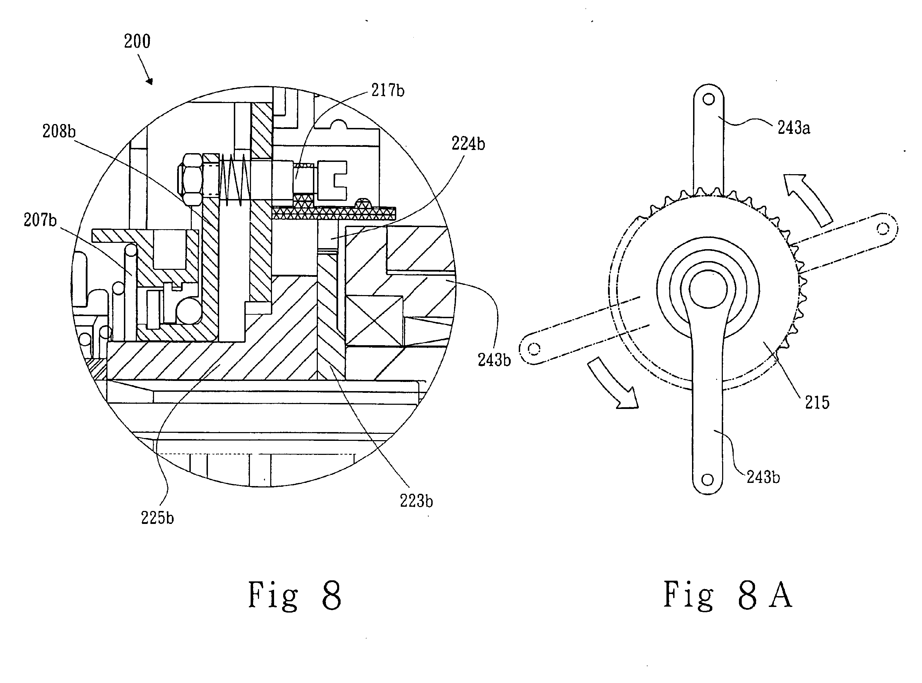

Referring to Figures 8 and 8A, when the control cable 402 drives the clips 401 a, 401 b to control the driving disk 208b and the connection rod 217b to engage the clutch ring block 224b with the control block 223b, the pedal cranks 243a, 243b are switched to a regular opposite-positioned condition whereby the pedal cranks 243a, 243b can be pedaled alternatively to rotate continuously for supplying power to the driving sprocket means 215, which is then transmitted to the rear wheel.

To summarize, the present invention offers the following advantages:

(1) The first advantage of the present invention is that a conventional and regular bicycle frame can be used to combine with the central shaft and the threaded collars of the quick assembly device to mount a clip bracket thereon so that no specific-purpose bicycle frame is needed in coupling the multi-mode mechanism to the regular bicycle frame. Thus, the construction is simplified and the assembling is made easy, both facilitating popularization of bicycle products of the present invention and enhancing economic values of the bicycle.

(2) The second advantage of the present invention is that the transmission mechanism of the present invention can be easily mounted to a regular bicycle frame by the general consumers, which facilitates popularization. In addition, the bicycle of the present invention can be of various modes of pedaling, which enhances pleasure of riding and appealing to the general consumers.

(3) The third advantage of the present invention is that the quick assembly device of the present invention can also work with a stationary bicycle, providing the stationary bicycle with different modes of pedaling so that a user may select different mode of pedaling depending upon the user's mood and desire. In addition, the various modes of pedaling provided by the present invention also allows a user of the stationary bicycle to carry out training and exercising of different muscles of the user.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A transmission mechanism for a bicycle having a frame (10), comprising:
a quick assembly device (12) comprising a central shaft (201), and a clip bracket (40), which is adapted to mount to a lower frame portion (11) of the bicycle frame (10); and
a multi-mode mechanism (200), which is supported and fixed by the quick assembly device (12) to provide the bicycle with multiple modes of pedaling,
**characterized in that**
the clip bracket (40) is adapted to be mounted to opposite sides of the lower frame portion (11) and the central shaft (201) can then be inserted through both the clip bracket (40) and the lower frame portion (11), the quick assembly device (12) further comprises threaded collars (30, 31) comprising bearings accommodated therein and being threadingly fixable to the opposite sides of the lower frame portion (11) respectively, fixing rings (32) being arranged to secure the clip bracket (40), resilient elements (207a, 207b), driving sprocket means (215), gear-shifting means (215a), threaded retention tubes (202a, 202b), pedal cranks (243a, 243b), locking members (203a, 203b), and caps (255a, 255b) being respectively mounted to opposite ends of the central shaft (201).

2. The transmission mechanism as claimed in claim 1, wherein the clip bracket (40) comprises, on opposite left and right sides thereof, retention rings (41 a, 41 b) having downward extensions forming therebetween a rear support block (42) in which threaded holes (42a, 42b) are defined and upward extensions forming therebetween a front support block (43) in which a threaded hole (43a) is defined, a control mechanism (400) comprising clips (401 a, 401 b) having a support block (406) that is attached to the clip bracket (40) and a control cable (402) coupled to the clips (401a, 401b) respectively.

3. The transmission mechanism as claimed in claim 2, wherein the clips (401 a, 401b) are attached to the clip bracket (40) by having threaded holes (406a, 406b) defined in the support block (406) of the clips (401a, 401b) in alignment with and fixed to the threaded holes (42a, 42b) of the rear support block (42) and wherein the control cable (402) is coupled to the clips (401a, 401b) and has a front end attached to the threaded hole (43a) of the front support block (43) of the clip bracket (40) so that operation of the control cable (402) controls movement of the clips (401a, 401b) and switches among different modes of pedaling.

4. The transmission mechanism as claimed in one of the foregoing claims, wherein the multi-mode mechanism comprises resilient elements (207a, 207b), driving disks (208b), connection rods (217b), clutch ring blocks (224b), control blocks (223b), and transmission blocks (225b), which are arranged in a symmetric manner on opposite ends of the central shaft (201) and wherein controlling of the clutch ring blocks (224b) to selectively engage the pedal cranks (243a, 243b) and the control blocks (223b), or engaging the pedal cranks (243a, 243b) and the transmission blocks (225b), multiple modes of pedaling can be realized.

## Patentansprüche

1. Übertragungsmechanismus für ein Fahrrad mit einem Rahmen (10), umfassend eine Schnellmontage-Vorrichtung (12), die eine zentrale Welle (201) und einen Klemmbügel (40) aufweist, der in der Lage ist, einen unteren Rahmenteil (11) des Fahrradrahmens (10) zu halten; und ferner umfassend einen Mehrfach-Mechanismus (200), der durch die Schnellmontage-Vorrichtung (12) getragen und befestigt wird, um auf diese Weise das Fahrrad mit vielfältigen Pedalantriebsarten zu versehen, **dadurch gekennzeichnet, daß** der Klemmbügel (40) an gegenüberliegenden Seiten des unteren Rahmenteils (11) angebracht werden kann und dann die zentrale Welle (201) sowohl durch den Klemmbügel (40) und den unteren Rahmenteil (11) gesteckt werden kann, wobei die Schnellmontage-Vorrichtung (12) des weiteren Gewindehülsen (30, 31) aufweist, welche Lager aufnehmen und mit den gegenüberliegenden Seiten des unteren Rahmenteils (11) entsprechend verschraubt sind, wobei ferner Fixierringe (32) so angeordnet sind, daß die Klemmhülse (40), federnde Elemente (207a, 207b), ein Antriebskettenrad-Vorrichtung (215), eine Gangwechselschaltung (215a), mit Gewinde versehene Rückhalterohre (202a, 202b), Pedalkurbeln (243a, 243b), Verriegelungskörper (203a, 203b) festgehalten werden und Kappen (255a, 255b) an den entgegengesetzten Enden der zentralen Welle (201) entsprechend befestigt sind.

2. Übertragungsmechanismus nach Anspruch 1, **dadurch gekennzeichnet, daß** der Klemmbügel (40) auf seinen entgegengesetzten linken und rechten Seiten Rückhalteringe (41a, 41b) aufweist, die mit unteren Verlängerungen versehen sind, welche zwischen sich einen hinteren Tragblock (42) bilden, in dem Gewindebohrungen (42a, 42b) ausgebildet sind, sowie obere Verlängerungen, die zwischen sich einen vorderen Tragblock (43) bilden, in dem eine Gewindebohrung (43a) ausgebildet ist, daß ein Steuermechanismus (400) vorgesehen ist, der Bügel (401a, 401b) mit einem Tragblock (406) aufweist, welcher an dem Klemmbügel (40) angebracht ist, und daß ein Steuerkabel (402) mit den Bügeln (401a, 401b) entsprechend verbunden ist.

3. Übertragungsmechanismus nach Anspruch 2, **dadurch gekennzeichnet, daß** die Bügel (401a, 401b) an dem Klemmbügel (40) dadurch angebracht sind, daß in dem Tragblock (406) der Bügel (401a, 401b) Gewindebohrungen (406a, 406b) vorgesehen sind, die mit ihnen fluchten und an den Gewindebohrungen (42a, 42b) des hinteren Tragblocks (42) befestigt sind, und daß das Steuerkabel (402) mit den Bügeln (401a, 401b) verbunden ist und ein vorderes Ende aufweist, das an der Gewindebohrung (43a) des vorderen Tragblocks (43) des Klemmbügels (40) so angebracht ist, daß die Betätigung des Steuerkabels (402) die Bewegung der Bügel (401 a, 401 b) steuert und unter den verschiedenen Arten des Pedalantriebs Schaltvorgänge ausführt.

4. Übertragungsmechanismus nach einem der vorhergehenden Ansprüche, **dadurch gekennzeichnet, daß** der Mehrfach-Mechanismus (200) federnde Elemente (207a, 207b), Antriebsscheiben (208b), Verbindungsstangen (217b), Kupplungsringblöcke (224b), Steuerblöcke (223b) und Übertragungsblöcke (225b) aufweist, die auf entgegengesetzten Enden der zentralen Welle (201) symmetrisch angeordnet sind, und daß durch Steuern der Kupplungsringblöcke (224b) zum wahlweisen Eingriff der Pedalkurbeln (243a, 243b) und der Steuerblöcke (223b) oder zum Eingriff der Pedalkurbeln (243a, 243b) und der Übertragungsblöcke (225b) vielfältige Arten des Pedalantriebs verwirklicht werden können.

## Revendications

1. Mécanisme de transmission pour une bicyclette ayant un cadre (10), comprenant :
un dispositif d'assemblage rapide (12) comprenant une tige centrale (201) et une platine-pince (40) qui est adaptée à être montée sur une portion inférieure (11) du cadre de bicyclette (10) ; et
un mécanisme multi-mode (200) qui est supporté et fixé par le dispositif d'assemblage rapide (12) pour assurer à la bicyclette une multiplicité de modes de pédalage,
**caractérisé en ce que**
la platine-pince (40) est adaptée à être montée sur des côtés opposés de la portion inférieure (11) du cadre et la tige centrale (201) peut être alors insérée à travers à la fois la platine-pince (40) et la portion inférieure (11) du cadre, le dispositif d'assemblage rapide (12) comprenant encore des colliers à vis (30, 31) comprenant des paliers logés à l'intérieur et susceptibles d'être fixés par vissage sur les côtés opposés de la portion de cadre (11) inférieure respectivement, des bagues de fixation (32) qui sont agencées pour fixer la platine-pince (40), des éléments élastiques (207a, 207b), des moyens formant roues dentées d'entraînement (215), des moyens de passage de vitesses (215a), des tubes de rétention à pas de vis (202a, 202b), des bielles de pédale (243a, 243b), des éléments de verrouillage (203a, 203b), et des capuchons (255a, 255b) qui sont respectivement montés sur des extrémités opposées de la tige centrale (201).

2. Mécanisme de transmission selon la revendication 1, dans lequel la platine-pince (40) comprend, sur ses bords opposés gauche et droit, des bagues de rétention (41a, 41b) ayant des extensions dirigées vers le bas qui forment entre elles un bloc de support postérieur (42) dans lequel sont définis des trous taraudés (42a, 42b) et des extensions dirigées vers le haut qui forment entre elles un bloc de support avant (43) dans lequel est défini un trou taraudé (43a), un mécanisme de commande (400) comprenant des pinces (401a, 401b) ayant un bloc de support (406) qui est attaché à la platine-pince (40), et un câble de commande (402) couplé aux pinces (401a, 401b) respectivement.

3. Mécanisme de transmission selon la revendication 2, dans lequel les pinces (401a, 401b) sont attachées à la platine-pince (40) en prévoyant de mettre les trous taraudés (406a, 406b) définis dans le bloc de support (406) des pinces (401a, 401b) en alignement avec les trous de taraudés (42a, 42b) du bloc de support arrière (42), et dans lequel le câble de commande (402) est couplé aux pinces (401a, 401b) et comporte une extrémité avant attachée au trou taraudé (43a) du bloc de support avant (43) de la platine-pince (40) de sorte qu'un fonctionnement du câble de commande (402) commande le mouvement des pinces (401a, 401b) et commute parmi différents modes de pédalage.

4. Mécanisme de transmission selon l'une quelconque des revendications précédentes,
dans lequel le mécanisme multi-mode comprend des éléments élastiques (207a, 207b), des disques d'entraînement (208b), des tiges de connexion (217b), des blocs de bagues d'embrayage (224b), des blocs de commande (223b) et des blocs de transmission (225b) qui sont agencés d'une manière symétrique sur des extrémités opposées de la tige centrale (201), et dans lequel la commande des blocs de bagues d'embrayage (224b) pour engager les bielles de pédale (243a, 243b) et les blocs de commande (223b) de manière sélective, ou l'engagement des bielles de pédale (243a, 243b) et les blocs de transmission (225b) permet de réaliser une multiplicité de modes de pédalage.
